# EUROPÄISCHE PATENTSCHRIFT

(11) **EP 2 646 713 B1**
(45) Veröffentlichungstag und Bekanntmachung des Hinweises auf die Patenterteilung: **06.09.2017**
(21) Anmeldenummer: 11778523.8
(22) Anmeldetag: 21.10.2011
(51) Int. Cl.: F16H 57/025, F16D 1/08

(54) **WELLENADAPTEREINHEIT MIT SEINEM ENTSPRECHENDEN GETRIEBE UND SEINER ENTSPRECHENDEN ANTRIEBSEINHEIT.**
SHAFT ADAPTER UNIT WITH THE CORRESPONDING GEARING THEREOF AND THE CORRESPONDING DRIVE UNIT THEREOF
UNITÉ D'ADAPTATION D'ARBRE, TRANSMISSION CORRESPONDANTE ET UNITÉ D'ENTRAÎNEMENT CORRESPONDANTE

(30) Priorität: 02.12.2010 DE 102010053027
(43) Veröffentlichungstag der Anmeldung: 09.10.2013
(73) Patentinhaber: Sew-Eurodrive GmbH & Co. KG, 76646 Bruchsal (DE)
(72) Erfinder: GRIMM, Andreas, 66121 Saarbrücken (DE)
(86) Internationale Anmeldenummer: PCT/EP2011/005324
(87) Internationale Veröffentlichungsnummer: WO 2012/072165

(56) Entgegenhaltungen:
- EP-A1- 1 674 761
- DE-U- 1 970 319
- DE-U1- 29 617 396
- FR-A- 740 132
- FR-A1- 2 245 113
- US-A- 5 934 156

## Beschreibung

Die Erfindung betrifft eine Wellenadaptereinheit, ein Getriebe und eine Antriebseinheit.

Aus der FR 74 31837 A1 ist eine Vorrichtung zum Anbau eines Elektromotors mit Motorwellenstumpf an einem Getriebekasten bekannt, wobei zwischen dem Elektromotor und dem Getriebekasten eine Zwischenlaterne montiert ist, welche eine Laternenwelle über zwei Kugellager lagert, wobei die Laternenwelle als Hohlwelle ausgebildet ist und eine Einsteckbohrung aufweist, in welcher der Motorwellenstumpf unter Zwischenschaltung drehfester elastischer Verbindungsmittel einsteckbar ist.

Aus der US 5 934 156 A ist eine eng verbundene Wellenadapter-Anordnung bekannt, bei welcher ein erster Adapter und ein zweiter Adapter jeweils ein einziges Lager aufnehmen.

Aus der DE 296 17 396 U1 ist eine Antriebseinheit bekannt, bei welcher in einem angeflanschten Gehäuse eine Welle durch zwei Wälzlager gelagert ist, wobei die Welle an ihrem einer Motorabtriebswelle zugewandten Ende hohl ausgebildet ist und die Motorabtriebswelle aufnimmt.

Aus der FR 740 132 A ist eine Motoranordnung mit einem Zahnradschutzkasten bekannt.

Aus der DE 1 970 319 U ist ein Planetenradgetriebe bekannt, bei welchem ein Sonnenrad schwimmend mit einer Abtriebswelle eines Motors verbunden ist, wobei die Verbindung axial neben zwei Wellenlagern ausgebildet ist.

Aus der EP 1 674 761 A1 ist ein Getriebekasten für einen Planeten-Getriebezug bekannt, bei welchem zwei Gehäuseschalen durch einen Kreisring verbunden sind.

Der Erfindung liegt die Aufgabe zugrunde, die Belastbarkeit einer Wellenadaptereinheit zu erhöhen.

Erfindungsgemäß wird die Aufgabe bei der Wellenadaptereinheit nach den in Anspruch 1, bei dem Getriebe nach den in Anspruch 11 und bei der Antriebseinheit nach den in Anspruch 13 angegebenen Merkmalen gelöst.

Wichtige Merkmale der Erfindung bei einer Wellenadaptereinheit sind in Anspruch 1 angegeben. Insbesondere wird somit bei einer Wellenadaptereinheit mit einem Getriebedeckel, einer in dem Getriebedeckel angeordneten Nabe und einem in der Nabe gelagerten Wellenadapter **vorgeschlagen,** dass der Wellenadapter durch zwei axial voneinander beabstandete Wellenlager in der Nabe gelagert ist, dass der Wellenadapter an einem Ende eine axiale Aufnahmebohrung aufweist, dass in der Aufnahmebohrung ein unrunder Axialabschnitt zur formschlüssigen Verbindung mit einer Einsteckwelle ausgebildet ist und dass der Axialabschnitt axial zwischen den Wellenlagern angeordnet ist. Von Vorteil ist dabei, dass das axial erforderliche Baumaß verringerbar ist. Von Vorteil ist weiter, dass der unrunde Axialabschnitt axial beidseitig lagerbar ist, wodurch die Führung verbesserbar ist. Somit ist die Belastbarkeit der formschlüssigen Verbindung verbessert.

Bei einer vorteilhaften Ausgestaltung kann vorgesehen sein, dass der Axialabschnitt als Steckverzahnung ausgebildet ist. Von Vorteil ist dabei, dass auf einfache Art eine formschlüssige Verbindung realisierbar ist.

Bei einer vorteilhaften Ausgestaltung kann vorgesehen sein, dass die Aufnahmebohrung durch wenigstens eines der zwei Wellenlager nach außen geführt ist. Von Vorteil ist dabei, dass eine insbesondere in axialer Richtung platzsparende Anordnung erreichbar ist. Gemäß der Erfindung ist vorgesehen, dass der Getriebedeckel einen kegelstumpfförmigen Grundkörper aufweist. Von Vorteil ist dabei, dass mit dem Getriebedeckel eine Aufnahme für die Wellenlager bildbar ist.

Bei einer vorteilhaften Ausgestaltung kann vorgesehen sein, dass in der Nabe wenigstens eine Öldurchlassöffnung ausgebildet ist. Von Vorteil ist dabei, dass den Wellenlagern Schmieröl zuführbar ist.

Bei einer vorteilhaften Ausgestaltung kann vorgesehen sein, dass die Öldurchlassöffnung radial ausgerichtet ist. Von Vorteil ist dabei, dass die Öldurchlassöffnung leicht zugänglich ist.

Bei einer vorteilhaften Ausgestaltung kann vorgesehen sein, dass die Öldurchlassöffnung in einem Nabeninnenraum zwischen den Wellenlagern mündet. Von Vorteil ist dabei, dass beide Wellenlager mit Schmieröl direkt versorgbar sind.

Bei einer vorteilhaften Ausgestaltung kann vorgesehen sein, dass der Wellenadapter an seinem der Aufnahmebohrung abgewandten Axialende eine Passfeder aufweist. Von Vorteil ist dabei, dass ein belastbarer Anschluss für eine weitere Welle vorbereitet ist.

Bei einer vorteilhaften Ausgestaltung kann vorgesehen sein, dass eine Mündung der Aufnahmebohrung bündig mit einer Grundfläche des kegelstumpfförmigen Grundkörpers abschließt. Von Vorteil ist dabei, dass die axiale Baulänge des Getriebedeckels voll nutzbar ist.

Bei einer vorteilhaften Ausgestaltung kann vorgesehen sein, dass eine Mündung der Aufnahmebohrung bündig mit einer Flanschfläche des Getriebedeckels abschließt. Von Vorteil ist dabei, dass die Wellenadaptereinheit derart an einem weiteren Gehäuseteil montierbar ist, dass ein über das Gehäusteil überstehendes Ende einer Einsteckwelle vollständig oder nahezu vollständig in der Aufnahmebohrung aufnehmbar ist.

Bei einer vorteilhaften Ausgestaltung kann vorgesehen sein, dass eine Höhe des Grundkörpers durch eine axiale Länge der Nabe und/oder einen axialen Abstand der Wellenlager voneinander bestimmt ist. Von Vorteil ist dabei, dass die volle axiale Baulänge des Grundkörpers für eine günstige Führung des Wellenadapters ausnutzbar ist.

Bei einer vorteilhaften Ausgestaltung kann vorgesehen sein, dass die Nabe koaxial zu dem Grundkörper angeordnet ist. Von Vorteil ist dabei, dass ein einfacher Aufbau möglich ist. Gemäß der Erfindung ist vorgesehen, dass die Nabe in einem von dem Grundkörpers eingefassten Raumwinkelbereich angeordnet ist. Von Vorteil ist dabei, dass die Nabe geschützt aufnehmbar ist. Gemäß der Erfindung ist vorgesehen, dass die Nabe in einen Innenraum des Grundkörpers abragt. Von Vorteil ist dabei, dass sich eine einfach fertigbare Form, insbesondere eine einfach gießbare Form, ergibt. Gemäß der Erfindung ist vorgesehen, dass die Nabe mit dem Grundkörper einstückig ausgebildet ist. Von Vorteil ist dabei, dass die Nabe und der Grundkörper stabil verbindbar sind. Von Vorteil ist weiter, dass die Nabe und der Grundkörper in einem gemeinsamen Fertigungsvorgang fertigbar sind. Gemäß der Erfindung ist vorgesehen, dass die Nabe und der Grundkörper als Gussteil ausgebildet sind. Von Vorteil ist dabei, dass die Nabe und der Grundkörper auf einfache Weise fertigbar sind.

Bei einer vorteilhaften Ausgestaltung kann vorgesehen sein, dass zwischen der Nabe und dem Grundkörper wenigstens eine Verstärkungswand ausgebildet ist. Von Vorteil ist dabei, dass die Stabilität der Verbindung der Nabe mit dem Grundkörper verbessert ist. Von Vorteil ist weiter, dass der Getriebedeckel mit erhöhter Verwindungssteifigkeit ausbildbar ist.

Wichtige Merkmale der Erfindung bei einem Getriebe, insbesondere bei einem Planetengetriebe, sind, dass eine erfindungsgemäße Wellenadaptereinheit ausgebildet ist. Von Vorteil ist dabei, dass unerwünschte Querkräfte bei der Drehmomentübertragung über den Formschluss reduzierbar oder vermeidbar sind.

Bei einer vorteilhaften Ausgestaltung kann vorgesehen sein, dass die Einsteckwelle in einem in Verbindungsposition im Axialabschnitt der Aufnahmebohrung angeordneten Wellenabschnitt eine der Aufnahmebohrung entsprechende Außenkontur aufweist. Von Vorteil ist dabei, dass ein Formschluss erreichbar ist.

Wichtige Merkmale der Erfindung bei einer Antriebseinheit, insbesondere bei einer elektrischen Antriebseinheit, sind, dass eine erfindungsgemäße Wellenadaptereinheit ausgebildet ist. Von Vorteil ist dabei, dass eine belastbare Anpassung auf eine gewünschte abtriebsseitige Wellenform erreichbar ist.

Bei einer vorteilhaften Ausgestaltung kann vorgesehen sein, dass die Einsteckwelle an einer antreibenden Welle eines Antriebs ausgebildet ist. Von Vorteil ist dabei, dass die erfindungsgemäße Adaptereinheit zur Anpassung der Antriebswelle an ein gewünschtes Maß und/oder eine gewünschte Passform erreichbar ist.

Bei einer vorteilhaften Ausgestaltung kann vorgesehen sein, dass die Einsteckwelle in einem in Verbindungsposition im Axialabschnitt der Aufnahmebohrung angeordneten Wellenabschnitt eine der Aufnahmebohrung, insbesondere einer der Innenkontur des Axialabschnitts, entsprechende Außenkontur aufweist. Somit ist auf einfache Weise eine formschlüssige Drehverbindung erreichbar.

Weitere Vorteile ergeben sich aus den Unteransprüchen.

### Bezugszeichenliste

- 1: Wellenadaptereinheit
- 2: Getriebedeckel
- 3: Wellenadapter
- 4: Nabe
- 5: Wellenlager
- 6: Wellenlager
- 7: Ende
- 8: Achse
- 9: Aufnahmebohrung
- 10: unrunder Axialabschnitt
- 11: Ende
- 12: Lagerzwischenraum
- 13: Steckverzahnung
- 14: Grundkörper
- 15: Mantelfläche
- 16: verjüngtes Ende
- 17: Flanschfläche
- 18: Lagerdeckel
- 19: aufgeweitetes Ende
- 20: Flanschfläche
- 21: Öldurchlassöffnung
- 22: Nabeninnenraum
- 23: Axialende
- 24: Passfeder
- 25: Mündung
- 26: Innenraum
- 27: Raumwinkelbereich
- 28: Verstärkungswand

Die Erfindung wird nun anhand von Abbildungen näher erläutert:

Es zeigt:
Fig. 1 eine dreidimensionale Schrägansicht einer erfindungsgemäßen Wellenadaptereinheit,
Fig. 2 eine weitere dreidimensionale Schrägansicht der Wellenadaptereinheit aus Fig. 1,
Fig. 3 eine dreidimensionale Schnittansicht der Wellenadaptereinheit aus Fig. 1 und
Fig. 4. einen Axialschnitt der Wellenadaptereinheit aus Fig. 1.

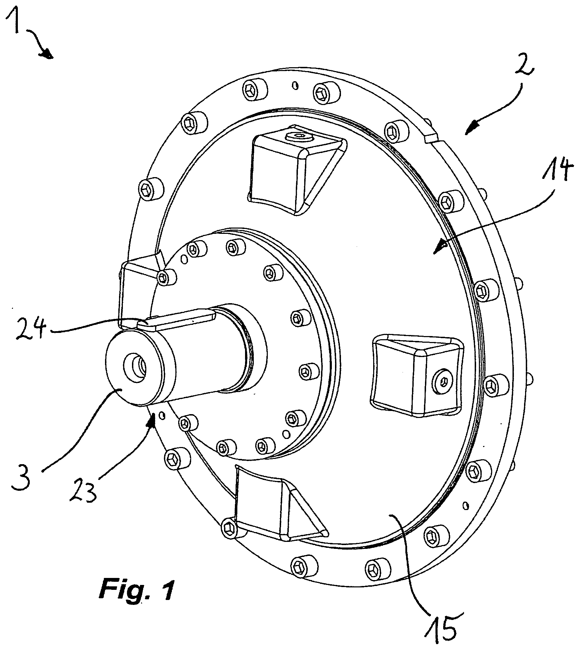

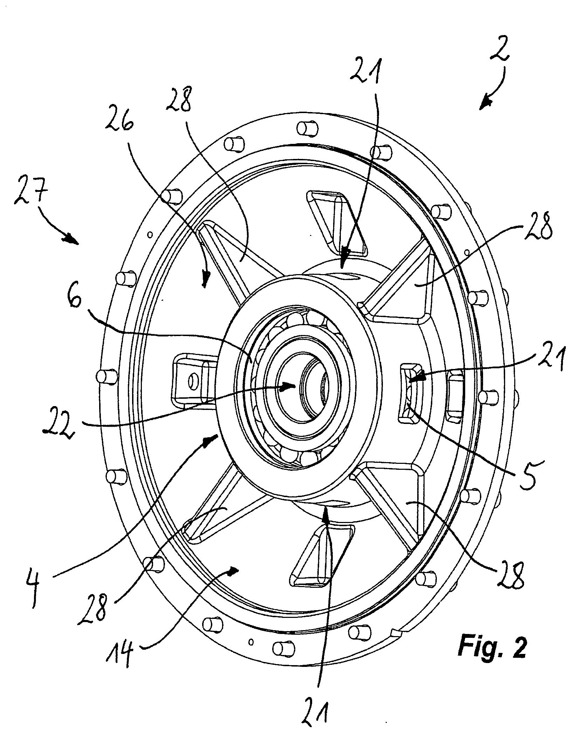

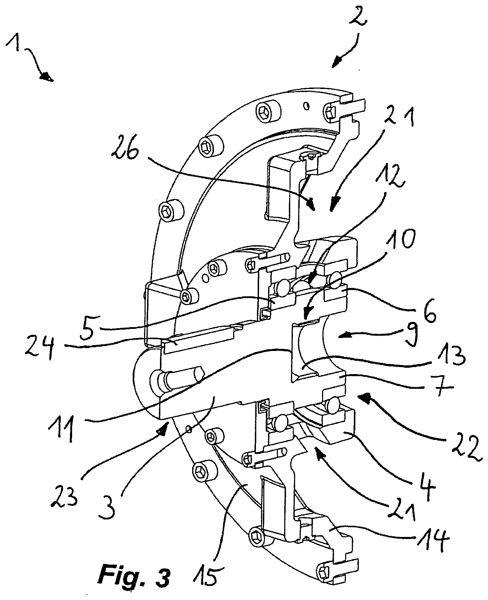

Die Figuren 1 bis 4 werden im Folgenden gemeinsam beschrieben.

Eine im Ganzen mit 1 bezeichnete Wellenadaptereinheit hat einen Getriebedeckel 2 und einen Wellenadapter 3.

An dem Getriebedeckel 2 ist eine Nabe 4 ausgebildet. Der Wellenadapter 3 ist in der Nabe 4 gelagert.

Hierzu sind in der Nabe 4 zwei Wellenlager 5, 6 angeordnet. Das Wellenlager 5 ist zu dem Wellenlager 6 axial beabstandet.

In den Wellenadapter 3 ist an einem - dem innenseitigen in Bezug auf den Getriebedeckel 2 - Ende 7 eine axial längs der Achse 8 des Wellenadapters 3 verlaufende Aufnahmebohrung 9 ausgebildet.

In der Aufnahmebohrung 9 ist ein unrunder Axialabschnitt 10 am Ende 11 der Aufnahmebohrung 9 ausgebildet.

Der unrunde Axialabschnitt 10 dient zur formschlüssigen, drehfesten Verbindung des Wellenadapters 3 mit einer in die Aufnahmebohrung 9 eingesteckten oder eingepassten Einsteckwelle.

Der unrunde Axialabschnitt 10 ist axial zwischen den Wellenlagern 5, 6 ausgebildet. Der Axialabschnitt 10 wird somit umfangsseitig von einem ringförmigen Lagerzwischenraum 12 eingefasst.

Der unrunde Axialabschnitt 10 weist eine Steckverzahnung 13 auf, die als Innenverzahnung ausgebildet ist. Die Steckverzahnung 13 schneidet zur formschlüssigen Verbindung in die Einsteckwelle ein, und/oder an der Einsteckwelle ist eine entsprechende Steckverzahnung als Außenverzahnung ausgebildet.

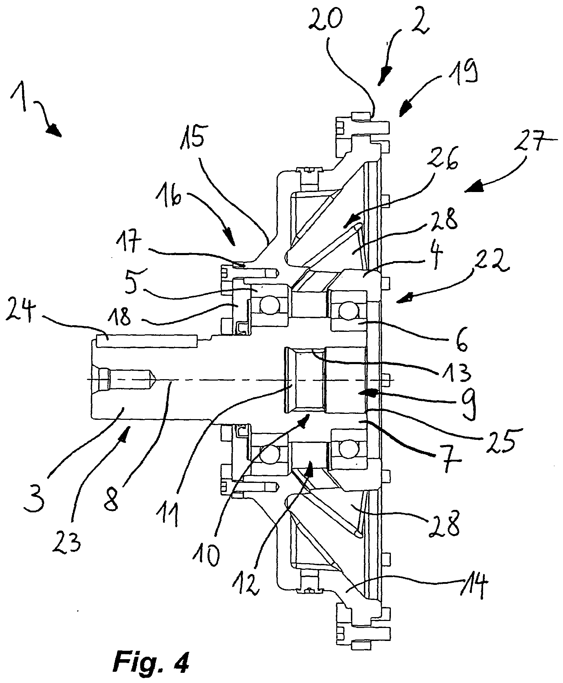

Wie aus Fig. 4 ersichtlich ist, ist die Aufnahmebohrung 9 durch das Wellenlager 6 hindurch nach außen geführt. Die Aufnahmebohrung 9 ist als Sackloch ausgebildet.

Der Getriebedeckel 2 weist einen kegelstumpfförmigen Grundkörper 14 auf.

Die Kegelstumpfform wird hierbei durch die Mantelfläche 15 gebildet.

Die Mantelfläche 15 geht an dem verjüngten Ende 16 in eine Flanschfläche 17 über, auf welche ein Lagerdeckel 18 gesetzt ist.

Die Mantelfäche 15 geht an dem aufgeweiteten Ende 19 in eine Flanschfläche 20 über. Mit der Flanschfläche 20 wird der Getriebedeckel 2 auf ein weiteres Gehäuseteil aufgesetzt.

An der Nabe 4 sind vier Öldurchlassöffnungen 21 ausgebildet. Die Öldurchlassöffnungen 21 sind in Umfangsrichtung jeweils zueinander um 90° versetzt angeordnet.

Jede Öldurchlassöffnung 21 mündet im Nabeninnenraum 22 der Nabe 4 zwischen den Wellenlagern 5, 6 in den Lagerzwischenraum 12.

Die Öldurchlassöffnungen 21 sind jeweils radial ausgerichtet und verlaufen ungefähr parallel zu Schräge des Grundkörpers 14 und dessen Mantelfläche 15.

An dem Axialende 23, welches der Aufnahmebohrung 9 abgewandt ist, ist eine Passfeder 24 zur drehfesten Verbindung des Wellenadapters 3 mit einem weiteren Bauteil angeordnet.

Die Mündung 25 der Aufnahmebohrung 9 schließt bündig mit der Flanschfläche 20 ab, welche die Grundfläche der Kegelstumpfform des Grundkörpers 14 beschreibt.

Aus Fig. 4 ist ersichtlich, dass die Höhe des Grundkörpers 14, und damit die axiale Länge des Getriebedeckels 2, durch die axiale Länge der Nabe 2 und den axialen Abstand der Wellenlager 5, 6 voneinander bestimmt oder vorgegeben sind.

Die Nabe 4 ist koaxial zur Achse 8 angeordnet. Die Nabe 4 ragt von dem Grundkörper 14 ab und in den Innenraum 26 des Getriebedeckels 2 hinein und ist in dem von dem Grundkörper 14 eingeschlossenen Raumwinkelbereich 27 angeordnet.

Die Nabe 4 ist mit dem Grundkörper 14 einstückig verbunden. Der Getriebedeckel 2 ist aus einem Gussteil gefertigt.

Zwischen der Nabe 4 und dem Grundkörper 14 sind zur Aussteifung des Getriebedeckels 2 Verstärkungswände 28 angeordnet. Die Verstärkungswände 28 sind radial ausgerichtet und verlaufen radial.

Die Wellenadaptereinheit 1 kann auf ein nicht weiter dargestelltes Getriebe und/oder eine nicht weiter dargestellte Antriebseinheit montiert werden. Hierbei hat das Getriebe oder die Antriebseinheit eine Einsteckwelle, welche in ihrem Einsteckbereich eine Außenkontur aufweist, die zur Erzeugung eines Formschlusses auf die Innenkontur des unrunden Axialabschnitts 10 abgestimmt ist.

Bei einer Wellenadaptereinheit 1 ist vorgesehen, in einer Aufnahmebohrung 9 eines Wellenadapters 3 einen unrunden Axialabschnitt 10 zur formschlüssigen, drehfesten Verbindung mit einer Einsteckwelle auszubilden, wobei der unrunden Axialabschnitt 10 axial zwischen zwei Wellenlagern 5, 6 des Wellenadapters 3 angeordnet ist.

## Patentansprüche

1. Wellenadaptereinheit (1)
mit einem Getriebedeckel (2),
einer in dem Getriebedeckel (2) angeordneten Nabe (4)
und einem in der Nabe (4) gelagerten Wellenadapter (3),
**wobei** der Wellenadapter (3) durch zwei axial voneinander beabstandete Wellenlager (5, 6) in der Nabe (4) gelagert ist,
wobei der Wellenadapter (3) an einem Ende (7) eine axiale Aufnahmebohrung (9) aufweist,
**wobei** in der Aufnahmebohrung (9) ein unrunder Axialabschnitt (10) zur formschlüssigen Verbindung mit einer Einsteckwelle ausgebildet ist,
**wobei** der Axialabschnitt (10) axial zwischen den Wellenlagern (5, 6) angeordnet ist,
**und wobei** der Getriebedeckel (2) einen kegelstumpfförmigen Grundkörper (14) aufweist,
**dadurch gekennzeichnet, dass**
**die Nabe (4) mit dem Grundkörper (14) einstückig als Gussteil ausgebildet ist**
**und dass die Nabe (4) in einen Innenraum (26) des Grundkörpers (14) abragt,**
**wobei die Nabe (4) in einem von dem Grundkörper (14) eingefassten Raumwinkelbereich (27) angeordnet ist.**

2. Wellenadaptereinheit (1) nach dem vorangegangenen Anspruch
**dadurch gekennzeichnet, dass**
der Axialabschnitt (10) als Steckverzahnung (13) ausgebildet ist.

3. Wellenadaptereinheit (1) nach einem der vorangegangenen Ansprüche,
**dadurch gekennzeichnet, dass**
die Aufnahmebohrung (9) durch wenigstens eines der zwei Wellenlager (5, 6) nach außen geführt ist.

4. Wellenadaptereinheit (1) nach einem der vorangegangenen Ansprüche,
**dadurch gekennzeichnet, dass**
in der Nabe (4) wenigstens eine vorzugsweise radial ausgerichtete Öldurchlassöffnung (21) ausgebildet ist.

5. Wellenadaptereinheit (1) nach einem der vorangegangenen Ansprüche,
**dadurch gekennzeichnet, dass**
die Öldurchlassöffnung (21) in einem Nabeninnenraum (22) zwischen den Wellenlagern (5, 6) mündet.

6. Wellenadaptereinheit (1) nach einem der vorangegangenen Ansprüche,
**dadurch gekennzeichnet, dass**
der Wellenadapter (3) an seinem der Aufnahmebohrung (9) abgewandten Axialende (23) eine Passfeder (24) aufweist.

7. Wellenadaptereinheit (1) nach einem der vorangegangenen Ansprüche,
**dadurch gekennzeichnet, dass**
eine Mündung (25) der Aufnahmebohrung (9) bündig mit einer Grundfläche des kegelstumpfförmigen Grundkörpers (14) und/oder mit einer Flanschfläche (20) des Getriebedeckels (2) abschließt.

8. Wellenadaptereinheit (1) nach einem der vorangegangenen Ansprüche,
**dadurch gekennzeichnet, dass**
eine Höhe des Grundkörpers (14) durch eine axiale Länge der Nabe (4) und/oder einen axialen Abstand der Wellenlager (5, 6) voneinander, bestimmt ist.

9. Wellenadaptereinheit (1) nach einem der vorangegangenen Ansprüche,
**dadurch gekennzeichnet, dass**
die Nabe (4) koaxial zu dem Grundkörper (14) angeordnet ist.

10. Wellenadaptereinheit (1) nach einem der vorangegangenen Ansprüche,
**dadurch gekennzeichnet, dass**
zwischen der Nabe (4) und dem Grundkörper (14) wenigstens eine Verstärkungswand (28) ausgebildet ist.

11. Getriebe, insbesondere Planetengetriebe,
**dadurch gekennzeichnet, dass**
eine Wellenadaptereinheit (1) nach einem der vorangegangenen Ansprüche ausgebildet ist.

12. Getriebe nach dem vorangegangenen Anspruch,
**dadurch gekennzeichnet, dass**
die Einsteckwelle in einem in Verbindungsposition im Axialabschnitt (10) der Aufnahmebohrung (9) angeordneten Wellenabschnitt eine der Aufnahmebohrung (9) entsprechende Außenkontur aufweist.

13. Antriebseinheit, insbesondere elektrische Antriebseinheit,
**dadurch gekennzeichnet, dass**
eine Wellenadaptereinheit (1) nach einem der Ansprüche 1 bis 12 ausgebildet ist, insbesondere wobei die Einsteckwelle an einer antreibenden Welle eines Antriebs ausgebildet ist.

14. Antriebseinheit nach dem vorangegangenen Anspruch,
**dadurch gekennzeichnet, dass**
die Einsteckwelle in einem in Verbindungsposition im Axialabschnitt der Aufnahmebohrung (9) angeordneten Wellenabschnitt eine der Aufnahmebohrung (9), insbesondere einer der Innenkontur des Axialabschnitts (10), entsprechende Außenkontur aufweist.

## Claims

1. A shaft adapter unit (1),
having a gear cover (2),
a hub (4) arranged in the gear cover (2),
and a shaft adapter (3) supported in the hub (4),
wherein the shaft adapter (3) is supported in the hub(4) by two mutually axially spaced shaft bearings (5, 6),
wherein the shaft adapter (3) has an axial receiving bore (9) at one end (7),
wherein a non-circular axial portion (10) for form-fitting connection to a plug-in shaft is formed in the receiving bore (9),
wherein the axial portion (10) is arranged axially between the shaft bearings (5, 6),
and wherein the gear cover (2) has a frustoconical base body (14),
**characterised in that**
the hub (4) is formed in one piece with the base body (14) as a cast part
and **in that** the hub (4) projects into an interior (26) of the base body (14),
wherein the hub (4) is arranged in a solid angle region (27) enclosed by the base body (14).

2. The shaft adapter unit (1) according to the preceding claim,
**characterised in that**
the axial portion (10) is formed as a spline (13).

3. The shaft adapter unit (1) according to one of the preceding claims,
**characterised in that**
the receiving bore (9) is guided outwards through at least one of the two shaft bearings (5, 6).

4. The shaft adapter unit (1) according to one of the preceding claims,
**characterised in that**
at least one preferably radially aligned oil outlet opening (21) is formed in the hub (4).

5. The shaft adapter unit (1) according to one of the preceding claims,
**characterised in that**
the oil outlet opening (21) leads into a hub interior (22) between the shaft bearings (5, 6).

6. The shaft adapter unit (1) according to one of the preceding claims,
**characterised in that**
the shaft adapter (3) has a feather key (24) at its axial end (23) remote from the receiving bore (9).

7. The shaft adapter unit (1) according to one of the preceding claims,
**characterised in that**
a mouth (25) of the receiving bore (9) terminates flush with a base surface of the frustoconical base body (14) and/or with a flange surface (20) of the gear cover (2).

8. The shaft adapter unit (1) according to one of the preceding claims,
**characterised in that**
a height of the base body (14) is determined by an axial length of the hub (4) and/or a mutual axial spacing of the shaft bearings (5, 6).

9. The shaft adapter unit (1) according to one of the preceding claims,
**characterised in that**
the hub (4) is arranged coaxially to the base body (14).

10. The shaft adapter unit (1) according to one of the preceding claims,
**characterised in that**
at least one reinforcing wall (28) is formed between the hub (4) and the base body (14).

11. A gear, in particular a planetary gear,
**characterised in that**
a shaft adapter unit (1) is formed according to one of the preceding claims.

12. The gear according to the preceding claim,
**characterised in that**,
in a shaft portion which is arranged in the axial portion (10) of the receiving bore (9) in the connecting position, the plug-in shaft shaft has an outer contour corresponding to the receiving bore (9).

13. A drive unit, in particular an electric drive unit,
**characterised in that**
a shaft adapter unit (1) is formed according to one of Claims 1 to 12,
in particular wherein the plug-in shaft is formed on a driving shaft of a drive.

14. The drive unit according to the preceding claim,
**characterised in that**, in a shaft portion which is arranged in the axial portion of the receiving bore in the connecting position, the plug-in shaft has an outer contour corresponding to the receiving bore (9), in particular to an inner contour of the axial portion (10).

## Revendications

1. Unité (1) d'adaptation d'arbre,
avec un couvercle de transmission (2),
avec un moyeu (4) disposé dans le couvercle de transmission (2),
et avec un adaptateur d'arbre (3) monté dans le moyeu (4),
sachant que l'adaptateur d'arbre (3) est monté dans le moyeu (4) par deux paliers d'arbre (5, 6) axialement distants l'un de l'autre,
sachant que l'adaptateur d'arbre (3) présente à une extrémité (7) un perçage récepteur axial (9),
sachant qu'un tronçon axial ovalisé (10) est configuré dans le perçage récepteur (9) pour la liaison par complémentarité de forme avec un arbre à emmancher,
sachant que le tronçon axial (10) est disposé entre les paliers d'arbre (5, 6),
et sachant que le couvercle de transmission (2) présente un corps de base tronconique (14),
**caractérisée en ce que** le moyeu (4) est réalisé d'un seul tenant avec le corps de base (14) sous la forme d'une pièce moulée en fonte,
et **en ce que** le moyeu (4) fait saillie dans un espace intérieur (26) du corps de base (14), sachant que le moyeu (4) est disposé dans une région d'angle solide (27) bordée par le corps de base (14).

2. Unité (1) d'adaptation d'arbre selon la revendication précédente, **caractérisée en ce que** le tronçon axial (10) est réalisé sous la forme d'une denture à emboîtement (13).

3. Unité (1) d'adaptation d'arbre selon l'une des revendications précédentes, **caractérisée en ce que** le perçage récepteur (9) est guidé vers l'extérieur par au moins un des deux paliers d'arbre (5, 6).

4. Unité (1) d'adaptation d'arbre selon l'une des revendications précédentes, **caractérisée en ce qu'**au moins une ouverture (21) de passage d'huile, orientée de préférence radialement, est configurée dans le moyeu (4).

5. Unité (1) d'adaptation d'arbre selon l'une des revendications précédentes, **caractérisée en ce que** l'ouverture (21) de passage d'huile débouche dans un espace intérieur (22) de moyeu entre les paliers d'arbre (5, 6).

6. Unité (1) d'adaptation d'arbre selon l'une des revendications précédentes, **caractérisée en ce que** l'adaptateur d'arbre (3) présente une clavette parallèle (24) à son extrémité axiale (23) opposée au perçage récepteur (9).

7. Unité (1) d'adaptation d'arbre selon l'une des revendications précédentes, **caractérisée en ce qu'**une embouchure (25) du perçage récepteur (9) se termine à fleur d'une surface de base du corps de base tronconique (14) et/ou d'une surface de bride (20) du couvercle de transmission (2).

8. Unité (1) d'adaptation d'arbre selon l'une des revendications précédentes, **caractérisée en ce qu'**une hauteur du corps de base (14) est déterminée par une longueur axiale du moyeu (4) et/ou par une distance axiale entre les paliers d'arbre (5, 6).

9. Unité (1) d'adaptation d'arbre selon l'une des revendications précédentes, **caractérisée en ce que** le moyeu (4) est disposé coaxialement au corps de base (14).

10. Unité (1) d'adaptation d'arbre selon l'une des revendications précédentes, **caractérisée en ce qu'**au moins une paroi de renforcement (28) est configurée entre le moyeu (4) et le corps de base (14).

11. Transmission, en particulier transmission planétaire, **caractérisée en ce qu'**une unité (1) d'adaptation d'arbre est configurée selon l'une des revendications précédentes.

12. Transmission selon la revendication précédente, **caractérisée en ce que** l'arbre à emmancher présente, dans un tronçon d'arbre disposé dans la position assemblée dans le tronçon axial (10) du perçage récepteur (9), un contour extérieur correspondant au perçage récepteur (9).

13. Unité d'entraînement, en particulier unité d'entraînement électrique, **caractérisée en ce qu'**une unité (1) d'adaptation d'arbre est configurée selon l'une des revendications 1 à 12, sachant en particulier que l'arbre à emmancher est configuré sur un arbre menant d'un entraînement.

14. Unité d'entraînement selon la revendication précédente, **caractérisée en ce que** l'arbre à emmancher présente, dans un tronçon d'arbre disposé dans la position assemblée dans le tronçon axial du perçage récepteur (9), un contour extérieur correspondant au perçage récepteur (9), en particulier au contour intérieur du tronçon axial (10).
